# EUROPEAN PATENT APPLICATION

(11) **EP 2 486 783 A1**
(43) Date of publication of application: **15.08.2012**
(21) Application number: 12150914.5
(22) Date of filing: 12.01.2012
(51) Int. Cl.: A01G 9/08

(54) **Conveying device for containers for plants and/or flowers**

(30) Priority: 10.02.2011 NL 2006175
(71) Applicant: Cornelissen Beheer B.V., 5856 AA Wellerlooi (NL)
(72) Inventor: Cornelissen, Andreas Hubertus Maria, 5856 AA Wellerlooi (NL)
(74) Representative: Algemeen Octrooi- en Merkenbureau

(57) **Abstract**

A conveying device (1) for containers (2) for plants and/or flowers, which conveying device is provided with-at least a first conveyor belt (3), with which the containers can be conveyed in a first conveying direction (P1), and at least a second conveyor belt (5) with which the containers can be conveyed in a second conveying direction (P2) extending substantially at a right angle to the first conveying direction, wherein the conveying device is further provided with a transfer member (7) with which a row of containers can be moved from a transfer zone (9) on the first conveyor belt to the second conveyor belt.

## Description

The invention relates to a conveying device as defined in the preamble of claim 1.

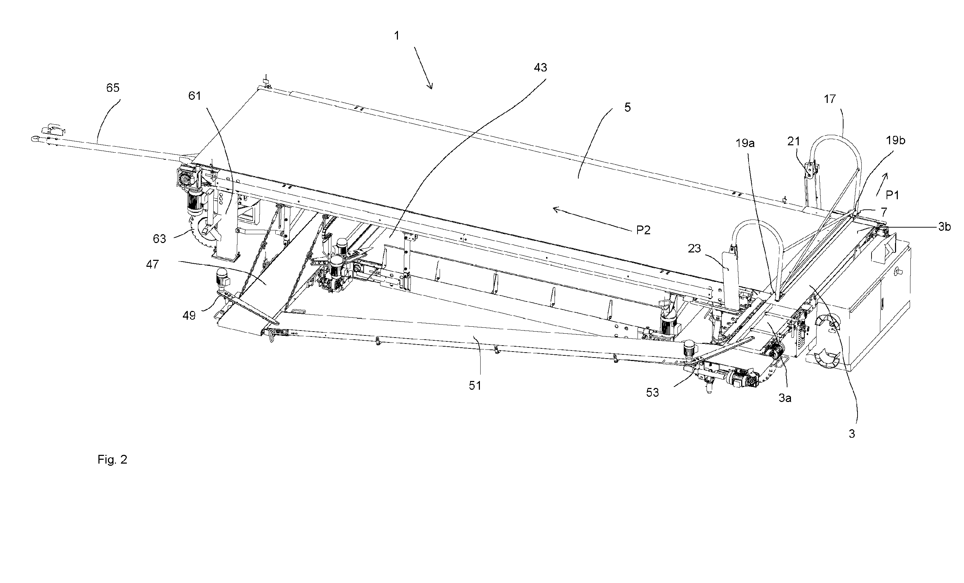

Such a conveying device is per se known from BE-1017716. In this conveying device the transfer member between two conveyor belts is denoted with means (reference numeral 13 in the figures) for changing the line of transport (conveying path) of containers such as flower pots, and these means comprise a driving band (mesband) as designated in figure 2 of BE-1017716 with the reference numeral 14. The known conveying device is further provided with wheels, and is therefore movable. The conveying device positions a row conveyed by means of the conveyor belts onto the ground surface and, using the wheels, then moves over a small distance for the purpose of setting down a subsequent row of pots on a ground surface.

A drawback of the known conveying device is that due to the method of operation of the device the capacity for conveying pots and optionally changing the distance between the pots and between rows formed by the pots during transport is relatively low.

It is therefore an object of the present invention to manufacture a conveying device with which per unit time a relatively large number of containers can be conveyed and the distance between the containers can be set.

Such an object is achieved using the conveying device according to the invention in that the transfer member is provided with an arm which can be moved from a first position located above the first conveyor belt to a second position for moving the row of containers from the transfer zone on the first conveyor belt to the second conveyor belt, on which different rows of containers can be formed for further transport, wherein the arm, during the return movement from the second to the first position, avoids the transfer zone on the first conveyor belt so that the containers on the first conveyor belt can be moved into the transfer zone during movement of the arm from the second to the first position.

A great advantage of using the arm is that rows of containers can be formed on the second conveyor belt for further transport. Containers are understood in this text to mean pots as well as trays for plants and/or flowers. Furthermore, because during the return movement the arm does not pass through the transfer zone, and more particularly the volume defined by the transfer zone and the plant containers with content to be collected thereon, the transfer zone of the first conveyor belt can, via feed from the first conveyor belt, be filled with containers simultaneously with the return movement of the arm. The simultaneous filling of the transfer zone and return movement of the arm enables more containers to be conveyed between the first and the second conveyor belt in a determined unit of time, in other words increases the capacity of the conveying device. Using the arm and the variably adjustable conveying speed of the second conveyor belt, rows of containers can further be placed at a desired distance from each other on the second conveyor belt. Once sufficient rows have been formed with a desired distance therebetween, the containers can be picked up, using a forklift truck provided with a special gripping fork, for example, and be further transported, for example placed on a ground surface.

An embodiment of the conveying device according to the invention is **characterized in that** the transfer zone of the first conveyor belt lies at a substantially identical vertical level as the second conveyor belt.

The transfer zone forms only a portion of the first conveyor belt and the dimensions correspond to the length of the arm or the length of a row of containers to be formed and the width to the maximum diameter of the containers. If the transfer zone lies at the same height as the second conveyor belt, only a linear, practically horizontal movement need then be performed using the arm. Using this linear movement of the arm the containers can then be dragged from the first conveyor belt to the second conveyor belt relatively quickly using the arm.

Another embodiment of the conveying device according to the invention is **characterized in that**, during the movement of the arm from the second to the first position, the arm is moved via a height other than during the movement of the arm from the first to the second position.

Different movements of the arm can be envisaged so as to avoid, via a vertical movement thereof, the volume defined by the transfer zone and the plant pots with content to be collected thereon, so that during this return movement of the arm from the second to the first position the arm does not pass through the transfer zone and the transfer zone can simultaneously be filled.

The arm can for example be moved vertically upward from the second position, then perform a horizontal movement over the transfer zone and subsequently once again perform a vertical movement downward into the first position. Many combinations of vertical and horizontal movement with the arm are however possible for the purpose of returning from the second to the first position and not passing through the transfer zone while doing so.

A preferred embodiment of the conveying device according to the invention is **characterized in that** the movement of the arm from the first to the second position extends substantially parallel to the horizontal, while the arm pivots around a horizontally extending pivot pin during the movement from the second to the first position.

Such a movement of the arm is relatively energy-efficient and can be manufactured relatively simply and cost-effectively. Using the rotation about the pivot pin the transfer zone can be avoided in simple manner so that it can be filled during the rotation of the arm.

Yet another embodiment of the conveying device according to the invention is **characterized in that** the arm is telescopically displaceable or foldable so that in the second position the arm can be displaced inward or folded inward before it is moved from the second position to the first position.

Using such an arm it is likewise possible to avoid the transfer zone during return movement of the arm from the second position to the first position since the dimensions of the arm are adapted such that it does not cut across / pass through the transfer zone during the return movement. Having arrived in the first position, the arm can be displaced or folded outward so that using the arm the following row of containers can be moved from the first to the second conveyor belt.

A further embodiment of the conveying device according to the invention is **characterized in that** the arm is mounted pivotally around a vertically extending pivot pin around which the arm moves from the second position to the first position in an area located substantially outside the conveyor belts.

By pivoting the arm to an area located outside the conveyor belts before or during performing of the movement of the arm from the second to the first position the arm can likewise be moved round the transfer zone, so that this latter can be filled simultaneously with this movement of the arm.

A further embodiment of the conveying device according to the invention is **characterized in that** the first conveyor belt is provided with two successive conveyor belt parts, wherein the relative speed between the two conveyor parts is variable for the purpose of setting the distance between successive pots.

Using such a first conveyor belt the distance between the containers in a single row can be modified and set in simple manner.

Another embodiment of the conveying device according to the invention is **characterized in that** the two successive conveyor belt parts comprise a first and a second conveyor belt part, wherein the transfer zone is situated on the second conveyor belt part and wherein the first conveyor belt part is provided with sensors and container guide means.

Using the sensors the containers for forming a determined row can be counted and the first conveyor belt part can be temporarily stopped when the row is being moved from the transfer zone to the second conveyor belt using the arm. The containers in a row can be aligned using the guide means.

A further embodiment of the conveying device according to the invention is **characterized in that** the conveying device is provided with a movable undercarriage.

The conveying device is preferably provided with an undercarriage comprising wheels so that the conveying device can be employed at different locations. The conveying device can be moved easily using the undercarriage. An additional advantage of the increased mobility of the conveying device according to the present invention is that it becomes more suitable for hiring out.

Another further embodiment of the conveying device according to the invention is **characterized in that** the conveying device is provided with a third feed conveyor belt located at a vertical level other than the second conveyor belt, wherein the third feed conveyor belt, via a fourth conveyor belt connecting thereto, a fifth inspection conveyor belt and the first conveyor belt, can deliver containers, more particularly pots, to the second conveyor belt.

Particularly in the application of cultivating plants the required distance between pots with plants at a first growth stage can be much smaller than at a second growth stage. By varying the distance between the pots during growth of the plants economically efficient use can be made of the space available to a grower. Using the conveying device comprising the five above stated conveyor belts a number of rows of pots, where the distance between the pots must be adjusted for a subsequent growth phase, can be placed on the third feed conveyor belt using a forklift truck. Via the inspection conveyor belt where operators can inspect the plants and optionally remove weeds, the pots are conveyed to the first conveyor belt. Using the first conveyor belt the distance between the pots in a row can be varied, while using the arm and/or the conveying speed of the second conveyor belt the distance between the rows can be modified when the pots are moved from the first to the second conveyor belt. Once they have been brought together on the second conveyor belt, the rows of pots can be picked up using a forklift truck and set down in the open ground or in a greenhouse so that the plants can grow further.

Yet another embodiment of the conveying device according to the invention is **characterized in that** the second conveyor belt is located above the third feed conveyor belt, wherein the first, fourth and fifth conveyor belts can be pushed or folded into a transport position from an operating position for moving the containers.

The first, fourth and fifth conveyor belts are inwardly slidable or foldable so that the folded-in conveying device complies with the statutory dimensions set for a trailer or vehicle for travel on the public highway. In this way the conveying device can be made ready relatively quickly and easily for transport and use at different geographical locations a distance from each other.

The invention will now be elucidated on the basis of the accompanying figures, in which:
Figure 1 is a perspective view of a mobile conveying device according to the invention in the transport position,
Figure 2 is a perspective view of a mobile conveying device according to the invention in the operating position,
Figure 3 is a perspective view of a mobile conveying device according to the invention in operation,
Figure 4 is a perspective view of a mobile conveying device according to the invention in operation,
Figure 5 is a perspective view of a mobile conveying device according to the invention in operation,
Figure 6 is a perspective view of a mobile conveying device according to the invention in operation.

The same components are provided in the different figures with corresponding reference numerals.

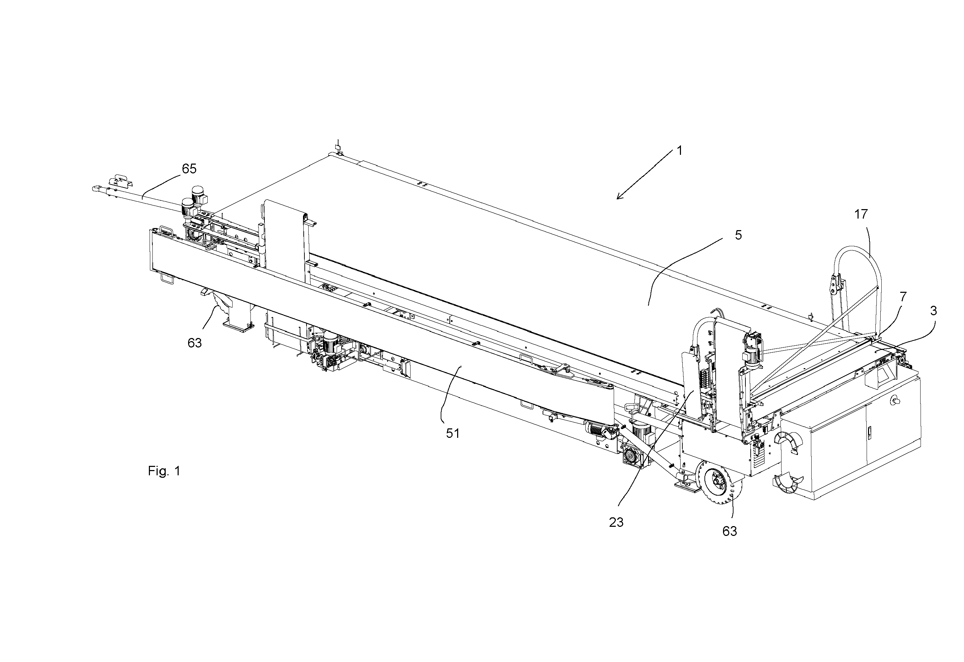

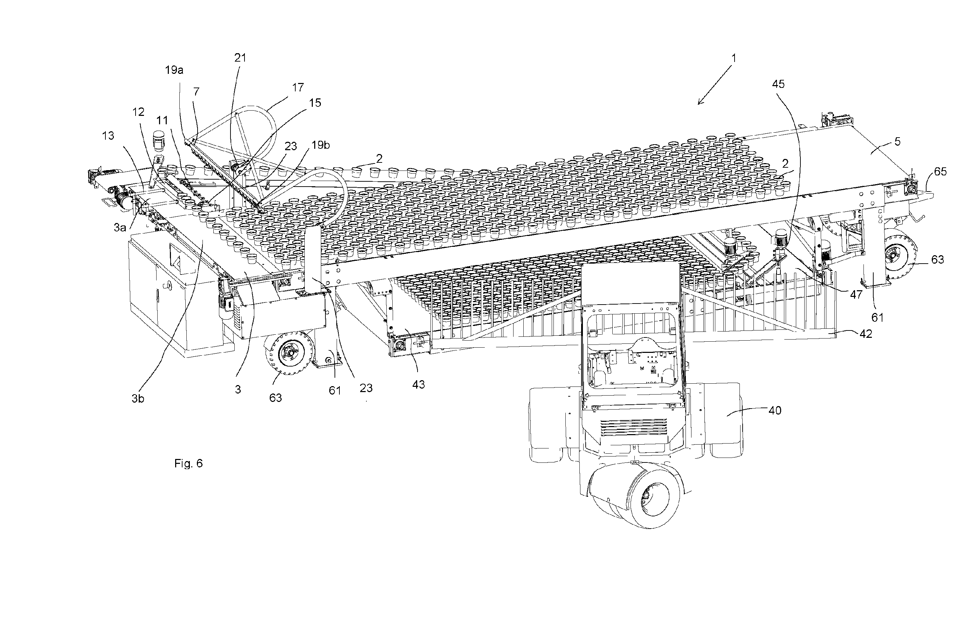

The conveying device 1 according to the invention will be explained with reference to figures 1-6. Shown in the figures as containers are pots.

Using the conveying device 1 according to the present invention pots 2 for plants and/or flowers can be conveyed from a first conveyor belt 3, with which the pots 2 can be conveyed in a first conveying direction indicated by arrow P1, to a second conveyor belt 5 with which the pots 2 can be conveyed in a second conveying direction P2 extending substantially at right angles to the first conveying direction P1.

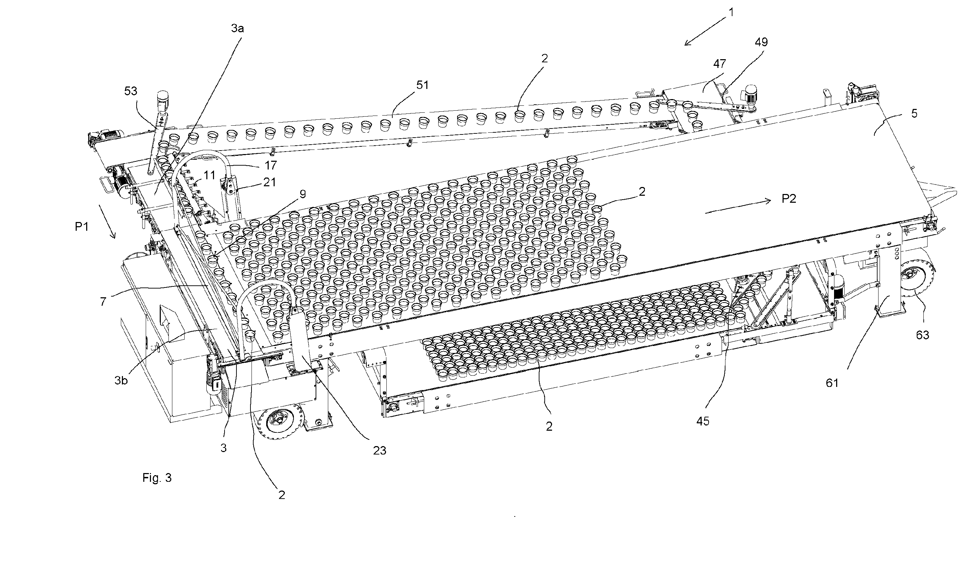

The conveying device 1 is provided with a transfer member comprising an exchangeable arm 7 with which a row of pots (see figure 3) can be moved from a transfer zone 9 on the first conveyor belt 3 to the second conveyor belt 5. The transfer zone 9 forms only a portion of the first conveyor belt 3 and the dimensions correspond to the length L of the arm 7 and the width to the maximum diameter of the pots 2. The first conveyor belt 3 is provided with two successive conveyor belt parts 3a, 3b, wherein the relative speed between the two transport parts 3a, 3b is variable for the purpose of setting the distance between successive pots 2.

When pots 2 with seeds or relatively young plants must be set out in a row array with a predetermined distance between each row and each pot in a row, only the first 3 and second conveyor belt 5 shown in the figures are then used. The pots are then placed manually or mechanically at the beginning of the first conveyor belt 3 and, using the arm 7 and the second conveyor belt 5, an array of pots 2 can then be made on the second conveyor belt 5 as shown in the figures. Instead of pots, particularly trays can be conveyed in this application using the conveying device according to the present invention.

In order to control the supply in rows the first conveyor belt 3, more particularly the first conveyor belt part 3a, is provided with sensors 11 and pot guide means 13, 15 for the purpose of forming an aligned row of pots, and using which the pots 2 are moved at the right moment from the first conveyor belt part 3a to the second conveyor belt part 3b, so that the arm 7 can then move a row formed in the transfer zone 9 to the second conveyor belt 5. The guide means 13, 15 comprise, among other parts, a plank 13 with which a channel 12 can be formed between the sensors 11 and the plank 13, wherein the distance between the plank 13 and the sensors 11 can be set subject to the diameter of the pots. The guide means 13, 15 further comprise a stop means 15 with which transport between the conveyor belts 3a and 3b can be temporarily halted.

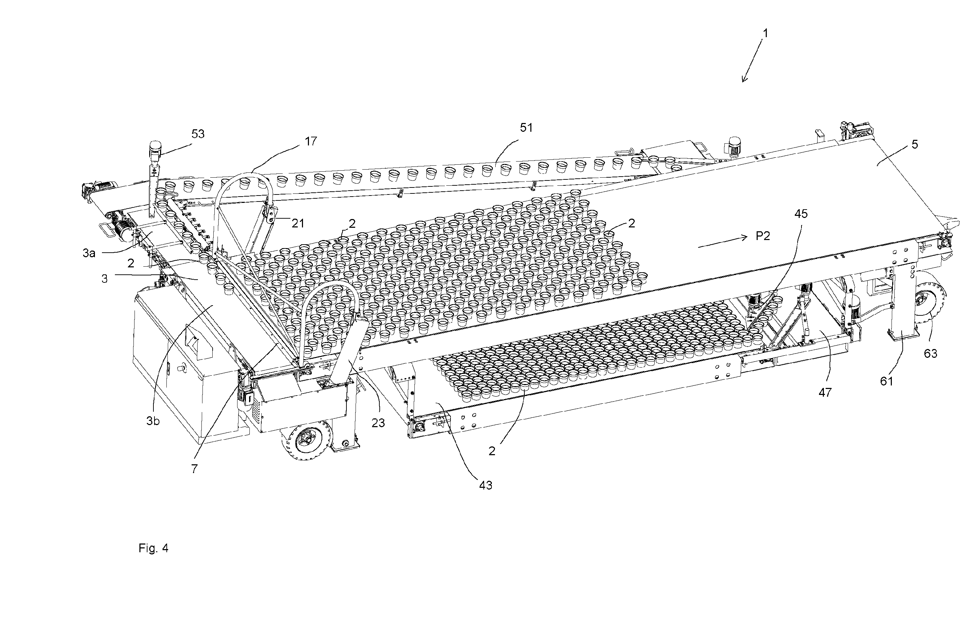

The arm 7 comprises the form of a bracket 17, the height of which is adapted to the maximum height of the plants being conveyed in the pots 2. The arm 7 is mounted exchangeably on the outer ends 19a, 19b of the bracket 17 so that the arm can be mounted with the correct profile, subject to the diameter of the pots, on the bracket 17. The bracket 17 is connected via a first pivot pin 21 to a moving arm 23, which is likewise movable via a tilt pin (not shown) through a relatively small angle between the position shown in figure 3 and the position shown in figure 4 for the purpose of moving the bracket 17 with the arm 7 from a first position located above the first conveyor belt 3 as shown in figure 3 to a second position lying close to or above the second conveyor belt 5 for the purpose of moving the row of pots 2 from the transfer zone 9 on the first conveyor belt 3 to the second conveyor belt 5.

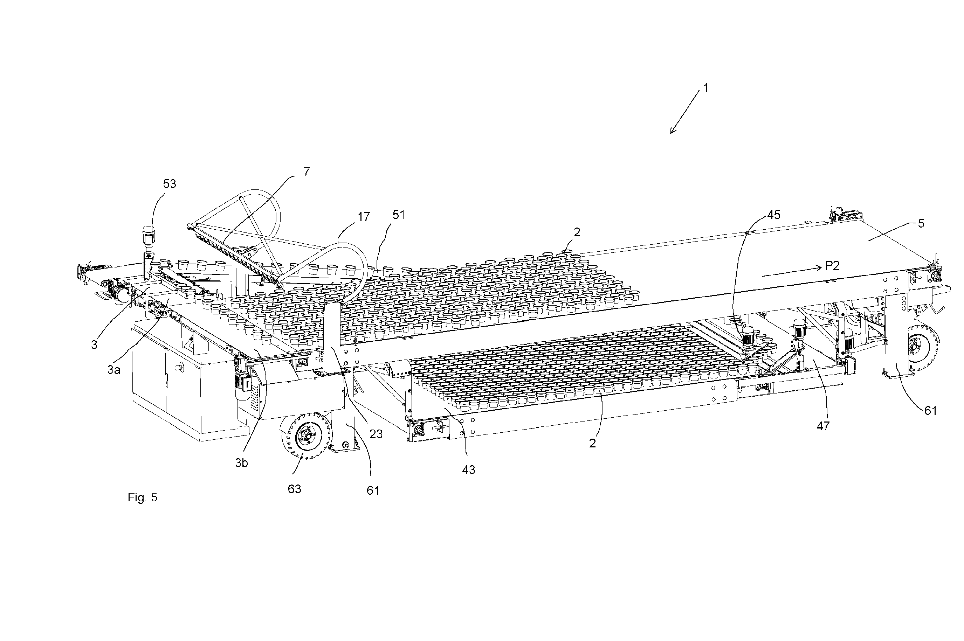

A particular aspect of the conveying device 1 according to the present invention is that, during the return movement from the second to the first position, the arm 7 avoids the transfer zone 9 on the first conveyor belt 3 by rotating the bracket 17 about the pivot pin 21 as shown in figure 5. By rotating the bracket 17, and thereby the arm 7, about the pivot pin 21, the pots 2 on the first conveyor belt can be moved into the transfer zone 9. The movement of the arm 7 about the pivot pin 21 for the purpose of returning to the first position thus ensures that more pots 2 can be conveyed per unit time from the first conveyor belt 3 to the second conveyor belt 5.

Rows of pots 2 are further placed in a desired array and at a desired distance from each other on the second conveyor belt 5 using the arm 7 and the variably adjustable conveying speed of the second conveyor belt 5. Once sufficient rows have been formed with a desired distance therebetween, the pots 2 can be picked up using for example a forklift truck 40 provided with a special gripping fork 42 and conveyed further, for example placed on a ground surface.

In the illustrated embodiment the conveying device 1 is provided with a third feed conveyor belt 43 which is located under the second conveyor belt 5 and extends in the same direction and with which pots can be conveyed in the same conveying direction P2. The width of the feed conveyor belt 43 is equal to the width of the second conveyor belt 5, while the length is shorter but sufficiently long to provide space for a quantity of pots 2 to be delivered using a fully filled fork 42 of the forklift truck 40. Provided at the end of the third feed conveyor belt 43 is a scraper 45 which is reciprocally movable for the purpose of moving the pots from the third feed conveyor belt 43 to a fourth conveyor belt 47. Using the fourth conveyor belt 47 the pots are moved in a conveying direction opposite to the direction indicated by arrow P1. Via a guide arm 49 the pots are conveyed to a fifth inspection conveyor belt 51 which encloses an angle with the horizontal and which moves the pots in a conveying direction opposite to the direction indicated by arrow P2. Owing to the inclination of the inspection conveyor belt 51 the pots are also moved in vertical direction. Via a further guide arm 53 the pots 2 are conveyed to the first conveyor belt 3, via which conveyor belt 3 the pots 2 are moved to the second conveyor belt 5 in the manner already described above using the arm 7.

The conveying device 1 shown in the figures is particularly suitable for cultivation of plants in pots, since using the conveying device according to the present invention the required distance between pots 2 with plants can be varied. At a first growth stage the distance required between the pots can be much smaller than at a second growth stage in which the plants increase in volume. By varying the distance between pots during the growth of the plants economically efficient use can be made of the space available to a grower. Using the conveying device 1 comprising the five above stated conveyor belts 3, 5, 43, 47, 51 a number of rows of pots 2, where the distance between the pots has to be adjusted for a subsequent growth stage, can be placed on the third feed conveyor belt 43 using a forklift truck 40. Via the conveyor belt 47, the inspection conveyor belt 51 where operators can inspect the plants and optionally remove weeds, the pots 2 are conveyed to the first conveyor belt 3. Using the first conveyor belt 3 the distance between the pots in a row can be set by varying the relative speed between the transport parts 3a, 3b, while using the arm 7 and/or the conveying speed of the second conveyor belt 5 the distance between the rows can be adjusted when the pots are moved from the first to the second conveyor belt. Once collected on the second conveyor belt 5, the rows of pots can be picked up using a forklift truck 40 and be set down in the open ground or in a greenhouse, so that the plants in the pots 2 can grow further. Using the forklift truck 40 the pots 2 with plants can optionally be placed in a truck or the like for further transport.

Depending on the dimensions of the plants in the pots 2, the height available for the plants on the third feed conveyor belt 43 can be adjusted using the supports 61, with which the distance between the second conveyor belt 5 and the ground surface can be varied, and thereby the height available for the plants on the third feed conveyor belt 43.

The conveying device 1 is further provided with a movable undercarriage with wheels 63. The conveying device is also provided with a coupling mechanism 65 for coupling to a vehicle for the purpose of moving the device. For transport purposes a portion of the first 3a, a portion of the fourth 47 and the inspection conveyor belt 51 are pushed or folded in from an operating position (as shown in figures 2-6) for moving the pots 2 to a transport position as shown in figure 1.

As claimed in the claims there are also moving options other than the shown pivotal movement for moving the arm 7 from the second position to the first position so that the transfer zone 9 can be simultaneously filled with pots 2.

## Claims

1. A conveying device for containers for plants and/or flowers, which conveying device is provided with at least a first conveyor belt, with which the containers can be conveyed in a first conveying direction, and at least a second conveyor belt with which the containers can be conveyed in a second conveying direction extending at an angle, preferably a right angle, to the first conveying direction, wherein the conveying device is further provided with a transfer member with which a row of containers can be moved from a transfer zone on the first conveyor belt to the second conveyor belt, **characterized in that** the transfer member is provided with an arm which can be moved from a first position located above the first conveyor belt to a second position for moving the row of containers from the transfer zone on the first conveyor belt to the second conveyor belt, on which different rows of containers can be formed for further transport, wherein the arm, during the return movement from the second to the first position, avoids the transfer zone on the first conveyor belt so that the containers on the first conveyor belt can be moved into the transfer zone during movement of the arm from the second to the first position.

2. A conveying device according to claim 1, **characterized in that** the transfer zone of the first conveyor belt lies at a substantially identical vertical level as the second conveyor belt.

3. A conveying device according to claim 1 or 2, **characterized in that** during the movement of the arm from the second to the first position the arm is moved via a height other than during the movement of the arm from the first to the second position.

4. A conveying device according to claim 3, **characterized in that** the movement of the arm from the first to the second position extends substantially parallel to the horizontal, while the arm pivots around a horizontally extending pivot pin during the movement from the second to the first position.

5. A conveying device according to claim 1 or 2, **characterized in that** the arm is telescopically displaceable so that in the second position the arm can be displaced inward before it is moved from the second position to the first position.

6. A conveying device according to claim 1 or 2 or 5, **characterized in that** the arm is mounted pivotally around a vertically extending pivot pin around which the arm moves from the second position to the first position in an area located substantially outside the conveyor belts.

7. A conveying device according to any of the foregoing claims, **characterized in that** the first conveyor belt is provided with two successive conveyor belt parts, wherein the relative speed between the two conveyor parts is variable for the purpose of setting the distance between successive containers.

8. A conveying device according to claim 7, **characterized in that** the two successive conveyor belt parts comprise a first and a second conveyor belt part, wherein the transfer zone is situated on the second conveyor belt part and wherein the first conveyor belt part is provided with sensors and container guide means.

9. A conveying device according to any of the foregoing claims, **characterized in that** the conveying device is provided with a movable undercarriage.

10. A conveying device according to any of the foregoing claims, **characterized in that** the conveying device is provided with a third feed conveyor belt located at a vertical level other than the second conveyor belt, wherein the third feed conveyor belt, via a fourth conveyor belt connecting thereto, a fifth inspection conveyor belt and the first conveyor belt, can deliver containers to the second conveyor belt.

11. A conveying device according to claim 10, **characterized in that** the second conveyor belt is located above the third feed conveyor belt, wherein the first, fourth and fifth conveyor belts can be pushed or folded into a transport position from an operating position for moving containers.

12. A conveying device according to claim 10 or 11, **characterized in that** the conveying device is provided with an adjusting mechanism for setting the height between the second and the third conveyor belt.

13. A vehicle, such as a truck, provided with a conveying device according to one or more of the foregoing claims.

14. Use of a conveying device according to one or more of the foregoing claims 1 to 11 I and/or use of a vehicle according to claim 12.
